# EUROPÄISCHE PATENTSCHRIFT

(11) **EP 0 682 561 B1**
(45) Veröffentlichungstag und Bekanntmachung des Hinweises auf die Patenterteilung: **14.08.1996**
(21) Anmeldenummer: 94906219.4
(22) Anmeldetag: 04.02.1994
(51) Int. Cl.: B01J 12/00, C09C 1/48, C01B 31/02, B01J 19/08

(54) **UMWANDLUNG VON KOHLENSTOFF ODER KOHLENSTOFFHALTIGEN VERBINDUNGEN IM PLASMA**
CONVERSION OF CARBON OR CARBONATED COMPOUNDS IN A PLASMA
CONVERSION DE CARBONE OU DE COMPOSES CARBONES DANS UN PLASMA

(30) Priorität: 05.02.1993 FR 9301554
(43) Veröffentlichungstag der Anmeldung: 22.11.1995
(73) Patentinhaber: ASSOCIATION POUR LA RECHERCHE ET LE DEVELOPPEMENT DES METHODES ET PROCESSUS INDUSTRIELS (ARMINES), F-75006 Paris (FR); TIMCAL AG, CH-6743 Bodio (CH); SCHWOB, Yvan, F-06400 Cannes (FR)
(72) Erfinder: SCHWOB, Yvan, F-06400 Cannes (FR); FISCHER, Francis, CH-5643 Sins (CH); FULCHERI, Laurent, F-06650 Opio (FR); WILLEMEZ, Pierre, F-06110 Le Cannet (FR)
(74) Vertreter: Hano, Christian, Dipl.-Ing.
(86) Internationale Anmeldenummer: EP9400321
(87) Internationale Veröffentlichungsnummer: WO9417908

(56) Entgegenhaltungen:
- WO-A-86/02024
- DD-A- 211 457
- DD-A- 276 098
- DD-A- 292 920
- FR-A- 2 562 902
- US-A- 4 472 254
- DATABASE WPI Week 937, Derwent Publications Ltd., London, GB; AN 93-055086 & JP,A,5 004 810 (SEMICONDUCTOR ENERGY LAB.) 14. Januar 1993

## Beschreibung

Die Erfindung betrifft eine Vorrichtung und ein Verfahren zur Umwandlung von Kohlenstoff oder kohlenstoffhaltigen Verbindungen im Plasma zu Kohlenstoffen mit definierter Nanostruktur.

Die Herstellung von Kohlenstoff z. B. Russen aus Kohlenstoff oder kohlenstoffhaltigen Verbindungen wie z. B. aus Kohlenwasserstoffen im Plasma ist bekannt.
So befassen sich z. B. die DD-Patentschriften 292 920, 276 098 und 211 457 mit der Herstellung von Russ durch Spaltung von Kohlenwasserstoffen z. B. Methan im Wasserstoffplasma. Die Spaltung erfolgt in einem sogenannten Plasmatron (Figur siehe DD-Patenschrift DD 211 457 worin ein auf 3500 bis 4000 K erhitzter Wasserstoff-Plasmastrahl den eingedüsten Kohlenwasserstoff spaltet.
Diese Vorrichtung kann als Standardvorrichtung für die plasmachemische Herstellung von Russen aus Kohlenwasserstoffen bezeichnet werden. Die genannte Vorrichtung und die damit verbundenen Verfahren sind folglich durchaus geeignet die üblichen Kohlenstoffe wie Russe in der vernünftiger Qualität zu produzieren. Die mit der bekannten Methode herstellbaren Kohlenstoffe, insbesondere die Russe, bestehen, wie die heutigen Erkenntnisse zeigen, aber nicht aus einheitlichen Strukturen sondern offenbaren sich als eine breite Verteilung verschiedener Kohlenstoffpartikeln mit deutlich unterschiedlicher Nanostruktur (dargestellt in Fig. 4 als Partikelzahl in Funktionen des Schichtebenenabstands c/2 in pm).
Die anwendungstechnischen Eigenschaften, eines z. B. nach dem Stand der Technik hergestelten Russes, resultieren folglich auch aus einem Durchschnitt der Eigenschaften der unterschiedlichen Partikel. Dies ist insofern unbefriedigend, da besondere Eigenschaften von Kohlenstoffpartikeln mit definierter Nanostruktur bisher nicht zugänglich sind.

Eine gezielte Herstellung von solchen Kohlenstoffen mit einer engen Verteilung von Kohlenstoffpartikeln, d. h. mit definierter Nanostruktur, ist hingegen mit den bekannten Vorrichtungen aus dem Stand der Technik nicht realisierbar, da es nicht gelingt eine kontrollierbare und homogene Plasmazone herzustellen.

In der WO-A-8602024 ist eine Vorrichtung zur plasmaphysikalischen und/oder plasmachemischen Stoffwandlung in einem Gleichstrombogenplasma beschreiben. Der Gleichstrombogen brennt zwischen mehreren als Kathode wirkenden Elektroden und einer Anodenlektrode. Der Gaseinlaß erfolgt über eine von den Elektroden unabhängige Düse. Das bearbeitete Material wird an den wänden des Plasmareaktors gesammelt.

Es bestand daher die Aufgabe eine Vorrichtung zu entwickeln, die es gestattet sehr exakt kontrollierbare Plasmabedingungen herzustellen. Desweiteren bestand die Aufgabe darin, mit Hilfe der Vorrichtung, ein Verfahren zu entwickeln, das gestattet Kohlenstoffe mit definierter Nanostruktur herzustellen.

Die Aufgabe konnte erfindungsgemäss gelöst werden mit der Vorrichtung gemäss Anspruch 1 sowie mit einem entsprechenden Verfahren gemäss Anspruch 9.

### Beschreibung der Figuren:

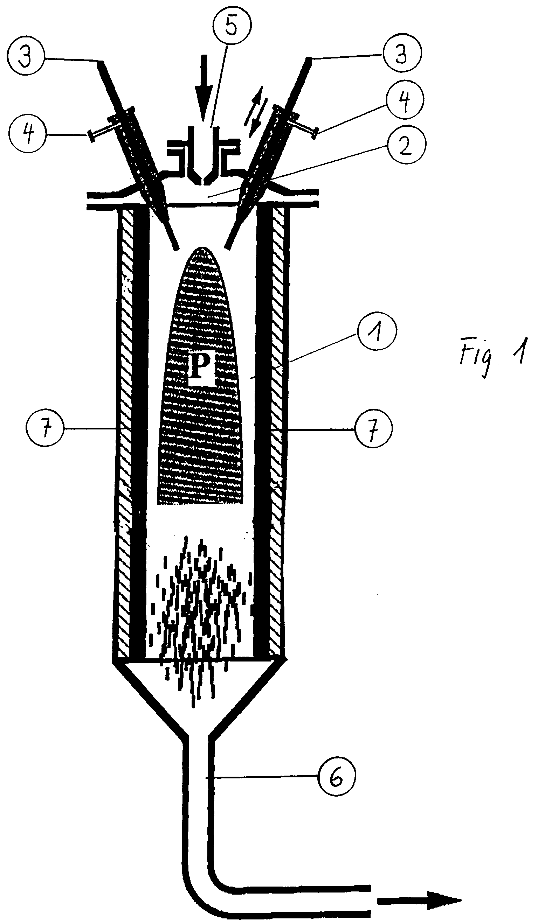

- Fig. 1: zeigt eine erste Ausführungsform der Vorrichtung. Von den drei vorhandenen Elektroden sind lediglich zwei dargestellt.
- Fig. 2: zeigt eine zweite Ausführungsform der Vorrichtung mit einer Zufuhreinrichtung zum raschen Abkühlen des gebildeten Kohlenstoffs.
- Fig. 3: zeigt einen Ausschnitt des Kopfteils der Vorrichtung. Von den drei vorhandenen Elektroden sind zwei dargestellt.
- Fig. 4: zeigt Verteilungskurven, die die Partikelzahl in Funktion des Schichtebenenabstands c/2 für Kohlenstoffe aus dem Stand der Technik darstellen (G = Graphit, A = Acetylenruss, C = Russ).
- Fig. 5: zeugt Verteilungskurven entsprechend Fig. 4, die nach dem erfindungsgemässen Verfahren hergestellte Kohlenstoffe mit definierter Nanostruktur darstellen G = Graphit, A'= Acetylenruss, C', C'' = Russe.

Die erfindungsgemässe Vorrichtung besteht gemäss Anspruch 1 aus einer hitzebeständig und wärmeisolierend ausgekleideten Reaktionskammer 1 in dessen Kopfteil 2
- drei Elektroden 3 winklig zur Achse der Vorrichtung, so angeordnet sind, dass die verlängerten Achsen einen Schnittpunkt im oberen Teil der Reaktionskammer 1 bilden,
- eine Zufuhreinrichung für das Plasmagas 4 so vorgesehen ist, dass das Plasmagas unmittelbar zu den Elektroden 3 geleitet wird,
- eine Zufuhreinrichtung für den Kohlenstoff oder die kohlenstoffhaltige Verbindung 5 so angeordnet ist, dass eine zielgerichtete Zufuhr in die zwischen den Elektroden 3 gebildete Plasmazone P ermöglicht wird und
in dessen Fussteil der Produktauslass 6 vorgesehen ist.

Die Reaktionskammer 1 ist zweckmässig zylinderförmig ausgelegt. Die Isolation 7 der Wände der Reaktionskammer besteht von Vorteil aus Graphit und gegebenenfalls einer zusätzlichen Keramikschicht. Es kanndesweiteren eine nicht näher dargestellte, zusätzliche flüssigkeitsgekühlte Doppelwandung vorgesehen werden.

Die im Kopfteil angeordneten drei Elektroden verfügen über einen Wechselspannungsanschluss von zweckmässig 50 bis 400 V. Sie sind zweckmässig in gleichmässigem Abstand (120°) verteilt und weisen von Vorteil einen Winkel zur Senkrechtachse der Vorrichtung von zweckmässig 15° - 90°, vorzugsweise von ca. 60° auf. Damit ist garantiert, dass die verlängerten die verlängerten Elektrodenachsen einen imaginären Schnittepunkt im oberen Teil der Reaktionskammer bilden.

Die Elektroden sind über eine geeignete Steuereinheit vorzugsweise individuell in ihrer Achsrichtung stufenlos verstellbar. Dies ist insbesondere darum wichtig, da zur Zündung des Lichtbogens die Elektroden angenähert werden und unmittelbar nach erfolgter Zündung so positioniert werden, dass die gewünschte stabile und homogene Plasmazone erhalten wird. Dem Abbrand der Elektroden entsprechend, werden die Elektroden automatisch nachjustiert. Als Eletrodenmaterial wird Kohlenstoff oder Graphit vorzugsweise Graphit verwendet.

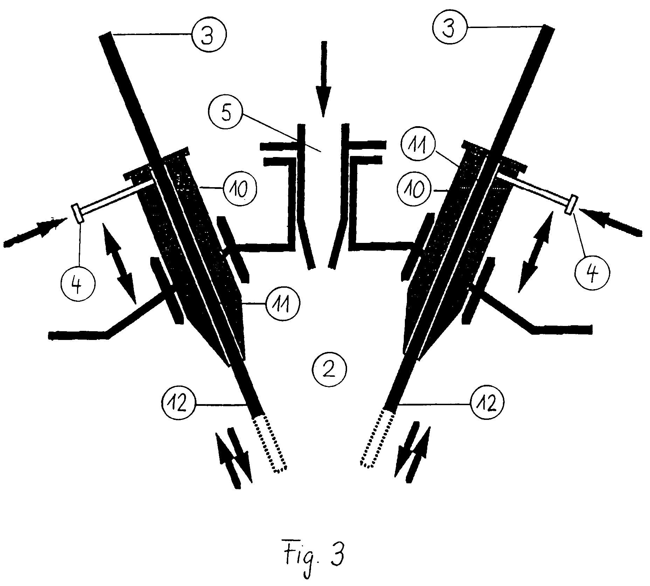

In einer bevorzugten Ausführungsform wird die Zufuhr des Plasmagases 4 gemäss Fig. 3 durch eine, die Elektroden 3 umschliessendes Mantelrohr 10 bewerkstelligt. Dieses Mantelrohr 10 umschliesst die Elektroden 3 so grosszügig, dass ein zylindrischer Zwischenraum 11 zwischen Mantelrohr 10 und Elektrode 3 für die Zufuhr des Plasmagases zur Verfügung steht. Von Vorteil endet dieses Mantelrohr 10, gegebenenfalls leicht abgeschrägt zur Elektrode hin, in einem solchen Abstand vor der EIektrodenspitze 12, dass deren Funktion nicht beeinträchtigt wird. Diese Einrichtung gestattet eine optimale Zufuhr des Plasmagases zu den Elektroden

Die Zufuhreinrichtung für den Kohlenstoff oder die kohlenstoffhaltige Verbindung 5 kann zweckmässig so ausgelegt werden, dass Stoffe in allen Aggregatzuständen zugeführt werden können. Selbstverständlich sind aber auch alle üblichen Zufuhreinrichtungen für ausschliesslich gasförmige, flüssige oder für feste Ausgangsstoffe einsetzbar.
Wichtig ist, dass die Zufuhreinrichtung 5 erlaubt die Ausgangsstoffe zielgerichtet und fein verteilt in die Plasmazone P einzubringen. Sie wird deshalb von Vorteil zentral im Kopfteil 2 der erfindungsgemässen Vorrichtung vorgesehen.

Abhängig von den gewählten Plasmabedingungen und folglich abhängig vom gebildeten Kohlenstoff ist eine schnelle oder eine langsame Abkühlung vorzusehen.

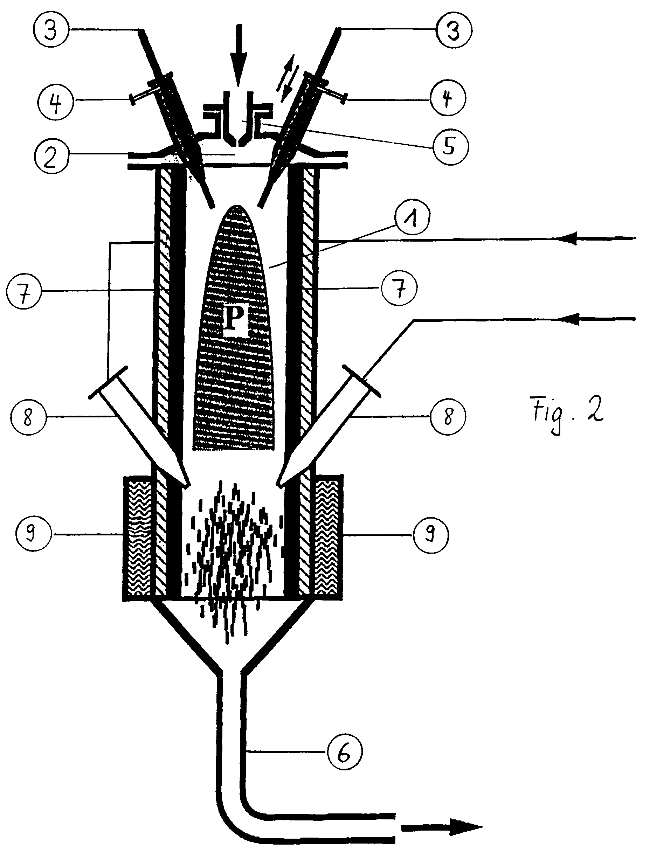

Entsprechend kann im unteren Teil der Reaktionskammer und / oder der Reaktionskammer anschliessend eine oder mehrere Kühleinrichtungen angeordnet werden.
So kann in einer speziellen Ausführungsform gemäss Fig. 2 zwischen oberem und unterem Teil der Reaktionskammer 1 zweckmässig unterhalb der Plasmazone P eine Zufuhreinrichtung 8 für ein Mittel zum raschen Abkühlen (Quenchmittel) des gebildeten Kohlenstoffs vorgesehen werden. Diese Zufuhreinrichtung ist zweckmässig als Düse ausgestattet, die gestattet ein flüssiges oder gasförmiges Quenchmittel fein in die Reaktionskammer 1 zu sprühen.
Alternativ oder zusätzlich kann auch der untere Teil der Reaktionskammer 1 mit einem flüssigkeitsgekühlten Mantel 9 ausgestattet sein, der eine zusätzliche Wärmeabführung erlaubt. Wiederum in einer weiteren speziellen, allerdings nicht näher dargestellten Ausführungsform, kann der Reaktionskammer 1 anschliessend eine separate Kühleinrichtung z. B. in Form von Wärmetauschern angeordnet sein, die gegebenenfalls auch mit einem Quenchmittel gespiesen werden können.

Der gebildete Kohlenstoff kann schliesslich über eine für Kohlenstoff übliche, nicht näher dargestellte, Separationseinrichtung abgetrennt werden. Von Vorteil besteht die Separationseinrichtung aus einem temperaturbeständigen Material. Bewährt haben sich deshalb z. B. Glassfritten, Keramikfilter oder Filter aus Kohlenstoffasermaterial oder PTFE.

Bei der Herstellung von Fullerenen kann die Separation auf bekannte Weise durch Extraktion mit einem geeigneten Lösungsmittel erfolgen.

Nicht näher dargestellt ist im weiteren eine zentrale Steuerungseinheit, die gestattet z. B. die Elektrodenpositionierung, die Energiezufuhr, die Zufuhr des Plasmagases, die Zufuhr des Kohlenstoffs oder des kohlenstoffhaltigen Mittels und gegebenenfalls des Quenchmittels zentral zu erfassen und zu beeinflussen.

Die erfindungsgemässe Vorrichtung hat einen Wirkungsgrad in der Grössenordnung von über 90% und ist damit auch vom wirtschaftlichen Standpunkt her den Vorrichtungen aus dem Stand der Technik (DD 292 920, 80%) weit überliegen.

Gegenstand der Erfindung ist im weiteren ein Verfahren zur Herstellung von Kohlenstoffen mit definierter Nanostruktur mit Hilfe der vorstehend dargestellten erfindungsgemässen Vorrichtung.

Zur Erzeugung des Plasmas ist erfindungsgemäss ein Plasmagas Voraussetzung. Als Plasmagase können grundsätzlich alle im Stand der Technik bekannten Gase wie z. B. Wasserstoff Stickstoff oder die Edelgase Helium, Neon oder Argon verwendet werden. Bevorzugtes Plasmsgas ist Wasserstoff.

Zur Umwandlung im Plasma sind Kohlenstoff oder kohlenstoffhaltige Verbindungen geeignet, wobei auch Mischungen der genannten Ausgangsstoffe durchaus eingesetzt werden können.

Unter Kohlenstoff werden Russe oder Graphite verstanden, deren Nanostruktur unbefriedigend ist und deshalb durch den erfindungsgemässen Plasmaprozess eine Qualitätssteigerung erfahren sollen.
Unter kohlenstoffhaltigen Verbindungen werden gasförmige, flüssige oder feste gesättigte oder ungesättigte aliphatische oder aromatische Kohlenwasserstoffe verstanden. Beispielhaft seien die Alkane oder Alkene mit 1 bis 20 C-Atomen wie Methan, Ethan, Ethylen oder Butadien oder die Aromaten Benzol, Styrol, Naphthalin oder Anthracen genannt. Ebenfalls geeignet sind Polymere von aliphatischen oder aromatischen Olefinen so z. B. das Polyethylen, Polypropylen oder das Polystyrol.

Zweckmässig wird so vorgegangen, dass zunächst das Plasmagas durch die entsprechende Zufuhreinrichtung 4 zu den Elektroden 3 geleitet wird, die Elektroden 3 darauf zur Zündung des Lichtbogens in Kontakt gebracht werden und nach erfolgter Zündung in die gewünschte Position zurückgefahren werden. Zur Erhaltung der Stabilität des Lichtbogens und somit zur Erhaltung einer gleichmässigen Plasmazone P werden die Elektroden ihrem Abbrand / Verbrauch entsprechend automatisch nachjustiert.
Entscheidend für eine gezielte Herstellung von Kohlenstoffen mit definierter Nanostruktur ist eine sehr präzise Einstellung der jeweils unterschiedlichen Plasmabedingungen insbesondere der Plasmatemperatur.
Die Plasmatemperatur ist in der Regel nicht direkt messbar, kann aber im wesentlichen über die zugeführte Energie und die Zufuhrmenge des Kohlenstoffs oder der kohlenstoffhaltigen Verbindung genau berechnet und entsprechend gesteuert werden.
Die zugeführte Energie ihrerseits ist abhängig von der jeweiligen Bildungsenthalpie des Ausgangsproduktes und der Zufuhrmenge des Plasmagases und kann folglich auch nach bekannten physikalisch-chemischen Methoden exakt bestimmt werden.
Üblicherweise bewegt sich die zugeführte Energie im Bereich von 40 kW/h bis 150 kW/h bevorzugt zwischen 50 kW/h bis 100 kW/h
Die genannten Ausgangsverbindungen werden über die Zufuhreinrichtung 5 zweckmässig zentral in die Plasmazone verteilt.

Für die Herstellung eines Graphits mit definierter Nanostruktur ist eine Plasmatemperatur im Bereich von 3000 - 3500°C Voraussetzung.

Für die Herstellung eines Acetylenrusses mit definierter Nanostruktur ist eine Plasmatemperatur im Bereich von 2000 - 3000°C notwendig und zur Herstellung eines Russes mit definierter Nanostruktur benötigt man eine Plasmatemperatur von 1200 - 2000°C.
Die Bildung von Fullerenen erfolgt schliesslich bei Temperaturen im Bereich von 3500 - 4500°C.

Dem gebildeten Produkt entsprechend, ist für die Kühlung eine der genannten Kühleinrichtungen vorgesehen
So sollte für einen Acetylenruss oder einen Russ eine Kühlrate von 80 K/s bis 1500 K/s, für Fullerene eine Kühlrate von 1000 K/s bis 2500 K/s angewendet werden.
Für Graphit sind in der Regel keine speziellen Kühlmassnahmen notwendig, da die sich zwangsläufig ergebende Abkühlung im unteren Teil der Reaktionskammer und bei der Austragung ausreichend ist.

Der bei der Plasmareaktion gebildete Wasserstoff wird von Vorteil aufgefangen und z. B., nach entsprechender Vorkühlung, als Kühlmittel wiederverwendet.

Wie in Fig. 2 dargestellt, kann die Kühlung z. B. so erfolgen dass ein vorgekühltes Inertgas wie z. B. Stickstoff oder Wasserstoff über die z. B. als Düsen ausgestattete Zufuhreinrichtung 8 unterhalb der Plasmazone P eingebracht wird, worauf der gebildete Kohlenstoff einer sehr raschen Kühlung (Quenchung) unterworfen wird.
Als Inertgas wird in diesem Zusammenhang bevorzugt der bei der Plasmareaktion gebildete und darauf recyclierte Wasserstoff eingesetzt.

Die Verweilzeit der gebildeten Kohlenstoffe in der Reaktionskammer beträgt ungefähr 2 bis 10 s.

Nach erfolgter Abkühlung kann der gebildete Kohlenstoff auf fachmännisch übliche Weise in der genannten Separationsvorrichtung aufbereitet und danach seiner weiteren Verwendung zugeführt werden.

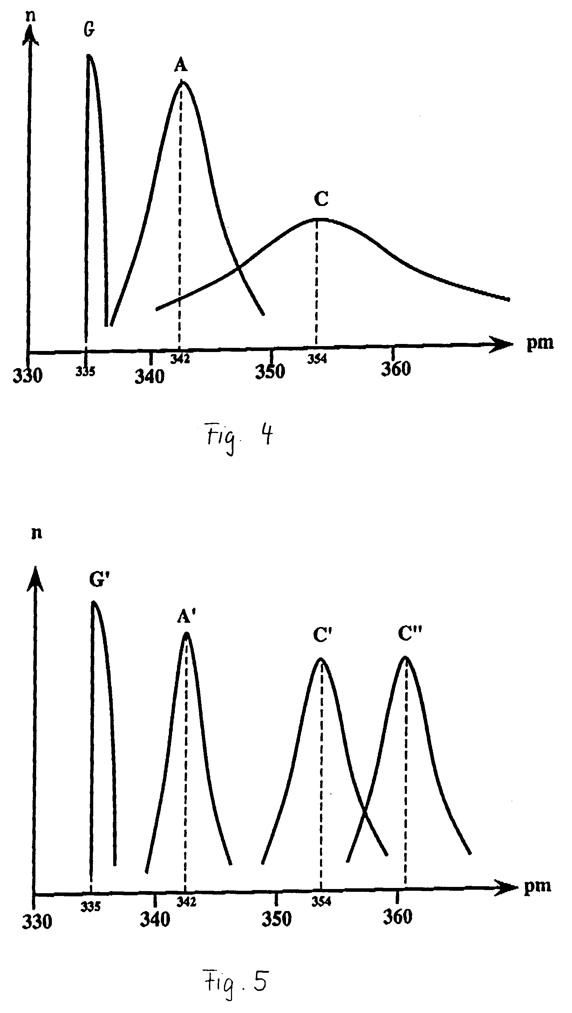

Die nach dem erfindungsgemässen Verfahren hergestellten Kohlenstoffe mit definierter Nanostruktur sind nicht bekannt und daher ebenfalls Bestandteil der Erfindung.
Entsprechend zeichnen sich diese Kohlenstoffe aus durch eine enge Verteilung von Kohlenstoffpartikeln mit definierter Nanostruktur (dargestellt in Fig. 5 als Partikelzahl in Funktion des Schichtebenenabstands). Deutlich gernacht wird die Breite der Verteilung der Kohlenstoffpartikel durch die Berechnung der Standardabweichung.

### Beispiele:

In den folgenden Beispielen wird eine Vorrichtung im wesentlichen gemäss Fig. 2 eingesetzt (Durchmesser Reaktionskammer 50 cm, Höhe der Reaktionskammer 200 cm). Die Vorrichtung wurde so gesteuert, dass in der Plasmazone eine Leistung von 50 kW (L1) bzw. 100 kW (L2) zur Verfügung stand. Der Wirkungsgrad der Anlage betrug 92% (L1) und 96% (L2).
Als Plasmagas wurde Wasserstoff verwendet.

Der gebildete Wasserstoffwurde recycliert.

Tabelle 1 gibt die Verfahrensparameter für die durchgeführten Umsetzungen wieder.

Tabelle 2 enthält die Charakterisierung der erhaltenen Produkte.

**Tabelle 1**

| Bsp. | Ausgangsprodukt | Leistung | Zufuhrmengen Nm³/h * kg/h | Plasma-Temperatur °C | Kühlrate K/s | Produkt |
|---|---|---|---|---|---|---|
| 1 | Methan | L1 | 37.2 | 2500 | 1000 | 4.5 kg/h Acetylenruss |
| 2 | Methan | L1 | 52 | 1500 | 900 | 7.2 kg/h Russ |
| 3 | Methan | L1 | 61 | 1500 | 900 | 8.1 kg/h Russ |
| 4 | Methan | L2 | 17.2 | 2600 | 1000 | 9 kg/h Acetylenruss |
| 5 | Methan | L2 | 37.2 | 1500 | 800 | 20 kg/h Russ |
| 6 | Methan | L2 | 8 | 3500 | 2500 | 4.2 kg/h Russ (Gehalt 8% Fullerene) |
| 7 | Ethylen | L2 | 25 | 2600 | 1200 | 27 kg/h Acetylenruss |
| 8 | Butadien | L2 | 15.2 | 2600 | 900 | 33 kg/h Acetylenruss |
| 9 | Butadien | L2 | 56 | 1500 | 800 | 124 kg/h Russ |
| 10 | Benzol | L2 | *43 | 2600 | 1000 | 40 kg/h Acetylenruss |
| 11 | Polyethylen¹ | L2 | *17.4 | 2600 | 1100 | 14.9 kg/h Acetlyenruss |
| 12 | Graphit | L2 | *2 | 4000 | 2500 | 2 kg/h Russ (Gehalt 12% Fullerene) |

| | | | | | | |
|---|---|---|---|---|---|---|
| 1 LACQTENE-2110-MN50 (ATOCHEM) | | | | | | |

**Tabelle 2**

| Beispiel | Kurvenzuordnung Fig .5 | mittl. Schichtenebenenabst. c/2 (n/m) | Standardabweichung |
|---|---|---|---|
| A (Fig. 4, Vergl.) | | 342 | 8 |
| C (Fig. 4, Vergl.) | | 354 | 15 |
| 1 | A' | 342 | 6 |
| 2 | C' | 354 | 5 |
| 3 | C'' | 360 | 6 |
| 4 | A' | 342 | 5 |
| 5 | C' | 357 | 6 |
| 6 | - Fullerene - | - | - |
| 7 | A' | 340 | 5 |
| 8 | A' | 341 | 4 |
| 9 | C' | 356 | 5 |
| 10 | A' | 346 | 4 |
| 11 | A' | 343 | 6 |
| 12 | - Fullerene | - | - |

## Patentansprüche

1. Vorrichtung zur Umwandlung von Kohlenstoff oder kohlenstoffhaltigen Verbindungen im Plasma bestehend aus einer hitzebeständig und warmeisolierend ausgekleideten Reaktionskammer (1), in dessen Kopfteil (2)
- drei über einen Wechselspannunganschluss verfügende Elektroden (3) winklig zur Achse der Vorrichtung so angeordnet sind, daß die verlängerten Achsen der Elektroden (3) einen Schnittpunkt im oberen Teil der Reaktionskammer (1) bilden und die Elektroden (3) individuell in der Richtung ihrer Achse stufenlos verstellbar sind,
- eine Zufuhreinrichtung für das Plasmagas (4) so vorgesehen ist, daß das Plasmagas unmittelbar zu den Elektroden (3) geleitet wird,
- eine Zunfuhreinrichtung für den Kohlenstoff oder die kohlenstoffhaltige Verbindung (5) so angeordnet ist, daß eine zielgerichtete Zufuhr in die zwischen den Elektroden (3) gebildete Plasmazone (P) ermöglicht wird und
in dessen Fußteil der Produktauslaß (6) vorgesehen ist.

2. Vorrichtung nach Anspruch 1, dadurch gekennzeichnet, daß die Elektroden (3) aus Graphit bestehen.

3. Vorrichtung nach Anspruch 1 oder 2, dadurch gekennzeichnet, daß die Zufuhreinrichtung für das Plasmagas (4) aus einem die Elektroden (3) umschließenden, bis kurz vor die Elektrodenspitze (12) reichenden Mantelrohr (10) besteht, wobei die Zufuhr des Plasmagases durch den zylinderförmigen Zwischenraum (11) zwischen Elektroden (3) und Mantelrohr (10) erfolgt.

4. Vorrichtung nach einem der Ansprüche 1 bis 3, dadurch gekennzeichnet, daß im unteren Teil der Reaktionskammer (1) und/oder dem unteren Teil der Reaktionskammer (1) anschließend eine oder mehrere Kühleinrichtungen angeordnet sind, die gegebenenfalls mit einem Mittel zum raschen Abkühlen des gebildeten Kohlenstoffs gespeist werden.

5. Vorrichtung nach Anspruch 4, dadurch gekennzeichnet, daß zwischen oberem und unterem Teil der Reaktionskammer (1) eine Zufuhreinrichtung (8) für ein Mittel zum raschen Abkühlen des gebildeten Kohlenstoffs vorgesehen ist.

6. Vorrichtung nach Anspruch 4 oder 5, dadurch gekennzeichnet, daß der untere Teil der Reaktionskammer mit einem flüssigkeitskühlenden Mantel (9) ausgestattet ist.

7. Vorrichtung nach einem der Ansprüche 1 bis 6, dadurch gekennzeichnet, daß zusätzlich eine Einrichtung zur Separierung des gebildeten Kohlenstoffs angeordnet ist.

8. Verfahren zur Herstellung eines Graphits mit definierter Nanostruktur oder eines Acetylenrußes mit definierter Nanostruktur oder eines Rußes mit definierter Nanostruktur oder von Fullerenen, dadurch gekennzeichnet, daß Kohlenstoff und/oder kohlenstoffhaltige Verbindungen bei Plasmabedingungen in einer Vorrichtung gemäß den Patentansprüchen 1 bis 7 umgewandelt werden, wobei
- zur Herstellung des Graphits mit definierter Nanostruktur eine Plasmatemperatur im Bereich von 3000°C bis 3500°C eingestellt wird,
- zur Herstellung des Acetylenrußes mit definierter Nanostruktur eine Plasmatemperatur im Bereich von 2000°C bis 3000°C eingestellt wird,
- zur Herstellung des Rußes mit definierter Nanostruktur eine Plasmatemperatur im Bereich von 1200°C bis 2000°C eingestellt wird und
- zur Herstellung der Fullerene eine Plasmatemperatur im Bereich von 3500°C bis 4500°C eingestellt wird.

9. Verfahren nach Patentanspruch 8, dadurch gekennzeichnet, daß als Plasmagas Wasserstoff, Stickstoff oder ein Edelgas eingesetzt wird.

10. Verfahren nach Patentanspruch 9, dadurch gekennzeichnet, daß Wasserstoff eingesetzt wird.

11. Verfahren nach einem der Patentansprüche 8 bis 10, dadurch gekennzeichnet, daß der bei der Umwandlung der kohlenstoffhaltigen Verbindungen gebildete Wasserstoff recycliert und gegebenenfalls als Mittel zum raschen Abkühlen wieder in den Prozeß geführt wird.

12. Verfahren nach einem der Patentansprüche 8 bis 11, dadurch gekennzeichnet, daß als kohlenstoffhaltige Verbindungen gasförmige, flüssige oder feste aliphatische oder aromatische Kohlenwasserstoffe oder Polymere von aliphatischen oder aromatischen Olefinen eingesetzt werden.

13. Kohlenstoffe mit definierter Nanostruktur erhältlich nach dem Verfahren nach einem der Patentansprüche 8 bis 12.

## Claims

1. Apparatus for the conversion of carbon or compounds containing carbon in a plasma consisting of a heat-resistant reaction chamber (1) with thermally insulated cladding, in the top part (2) of which
- three electrodes (3) having an alternating current supply are arranged at an angle to the axis of the apparatus in such a manner that the projected axes of the electrodes (3) intersect in the upper part of the reaction chamber (1) and the electrodes (3) are individually continuously adjustable in the direction of their axis,
- a feed apparatus for the plasma gas (4) is provided in such a manner that the plasma gas is guided directly to the electrodes (3),
- a feed apparatus for the carbon or compound containing carbon (5) is arranged in such a manner that it is possible purposefully to feed into the plasma zone (P) formed between the electrodes (3) and
in the bottom part of which the product outlet (6) is provided.

2. Apparatus according to claim 1, characterised in that the electrodes (3) consist of graphite.

3. Apparatus according to claim 1 or 2, characterised in that the feed device for the plasma gas (4) consists of a jacket tube (10) enclosing the electrodes (3) and extending until shortly before the electrode tip (12), wherein the plasma gas is fed through the cylindrical space (11) between the electrodes (3) and jacket tube (10).

4. Apparatus according to one of claims 1 to 3, characterised in that one or more cooling devices are arranged in the lower part of the reaction chamber (1) and/or downstream from the lower part of the reaction chamber (1), which devices are optionally supplied with an agent to achieve rapid cooling of the carbon formed.

5. Apparatus according to claim 4, characterised in that a feed device (8) for an agent to achieve rapid cooling of the carbon formed is provided between the upper and lower part of the reaction chamber (1).

6. Apparatus according to claim 4 or 5, characterised in that the lower part of the reaction chamber is equipped with a liquid-cooled jacket (9).

7. Apparatus according to one or claims 1 to 6, characterised in that a device for separating the formed carbon is additionally provided.

8. Process for the production of a graphite having a defined nanostructure or of an acetylene black having a defined nanostructure or of a carbon black having a defined nanostructures or of fullerenes, characterised in that carbon and/or compounds containing carbon are converted under plasma conditions in an apparatus according to patent claims 1 to 7, wherein
- a plasma temperature in the range from 3000°C to 3500°C is established in order to produce the graphite having a defined nanostructure,
- a plasma temperature in the range from 2000°C to 3000°C is established in order to produce the acetylene black having a defined nanostructure,
- a plasma temperature in the range from 1200°C to 2000°C is established in order to produce the carbon black having a defined nanostructure and
- a plasma temperature in the range from 3500°C to 4500°C is established in order to produce the fullerenes.

9. Process according to patent claim 8, characterised in that hydrogen, nitrogen or a noble gas is used as the plasma gas.

10. Process according to patent claim 9, characterised in that hydrogen is used.

11. Process according to one of patent claims 8 to 10, characterised in that the hydrogen formed during conversion of the compounds containing carbon is recycled and optionally returned to the process as an agent to achieve rapid cooling.

12. Process according to one of patent claims 8 to 11, characterised in that gaseous, liquid or solid aliphatic or aromatic hydrocarbons or polymers of aliphatic or aromatic olefins are used as the compounds containing carbon.

13. Carbons having a defined nanostructure obtainable using the process according to one of patent claims 8 to 12.

## Revendications

1. Dispositif de conversion de carbone ou de composés de carbone dans un plasma, constitué d'une chambre de réaction (1) résistante à la chaleur et revêtue d'une isolation thermique, dans la partie de tête (2) duquel
- trois électrodes (3) étant munies d'un raccord de courant alternatif, sont disposées d'une manière angulaire par rapport à l'axe du dispositif de telle manière que les axes prolongés des électrodes (3) forment un point d'intersection dans la partie supérieure de la chambre de réaction (1) et que les électrodes (3) sont réglables de manière continue individuellement dans la direction de leur axe,
- un dispositif d'alimentation pour le gaz plasmatique (4) est prévu, de telle manière que le gaz plasmatique est acheminé immédiatement vers les électrodes (3),
- un dispositif d'alimentation pour le carbone ou le composé de carbone (5) est disposé de telle manière qu'une alimentation orientée dans la zone plasmatique P formée entre les électrodes (3) est rendu possible et dans la partie basse duquel est prévue une sortie (6) pour le produit.

2. Dispositif selon la revendication 1, caractérisé en ce que les électrodes (3) sont constituées de graphite.

3. Dispositif selon la revendication 1 ou 2, caractérisé en ce que le dispositif d'alimentation pour le gaz plasmatique (4) est constitué d'une enveloppe tubulaire (10) entourant les électrodes (3) et s'étendant jusque juste avant la pointe de l'électrode (12), l'alimentation du gaz plasmatique s'effectuant par l'espace intermédiaire cylindrique (11) entre les électrodes (3) et l'enveloppe tubulaire (10).

4. Dispositif selon l'une quelconque des revendications 1 à 3, caractérisé en ce que dans la partie inférieure de la chambre de réaction (1) et/ou en aval de la partie inférieure de la chambre de réaction (1) sont disposés un ou plusieurs dispositifs de refroidissement qui sont éventuellement alimentés par un agent pour le refroidissement brusque du carbone formé.

5. Dispositif selon la revendication 4, caractérisé en ce qu'entre la partie supérieure et la partie inférieure de la chambre de réaction (1) est prévue un dispositif d'alimentation (8) pour un agent pour le refroidissement brusque du carbone formé.

6. Dispositif selon la revendication 4 ou 5, caractérisé en ce que la partie inférieure de la chambre de réaction est munie d'une chemise (9) refroidissant un liquide.

7. Dispositif selon l'une quelconque des revendications 1 à 6, caractérisé en ce qu'en outre est prévu un dispositif pour la séparation du carbone formé.

8. Procédé de production d'un graphite avec une nanostructure définie ou d'une suie d'acétylène avec une nanostructure définie ou d'une suie avec une nanostructure définie ou de fullerènes, caractérisé en ce que, le carbone et/ou les composés de carbone sont convertis à des conditions de plasma dans un dispositif selon les revendications 1 à 7, où
- pour la production du graphite avec une nanostructure définie on règle une température plasmatique dans la gamme de 3000 °C à 3500 °C,
- pour la production de la suie d'acétylène avec une nanostructure définie on règle une température plasmatique dans la gamme de 2000 °C à 3000 °C,
- pour la production de la suie avec une nanostructure définie on règle une température plasmatique dans la gamme de 1200 °C à 2000 °C et
- pour la production de fullerènes on règle une température plasmatique de 3500 °C à 4500 °C.

9. Procédé selon la revendication 8, caractérisé en ce qu'on utilise à titre de gaz plasmatique de l'hydrogène, de l'azote ou un gaz noble.

10. Procédé selon la revendication 9, caractérisé en ce qu'on utilise de l'hydrogène.

11. Procédé selon l'une quelconque des revendications 8 à 10, caractérisé en ce qu'on recycle l'hydrogène formé lors de la conversion des composés de carbone et en ce qu'on le réachemine comme agent de refroidissement brusque de nouveau dans le procédé.

12. Procédé selon l'une quelconque des revendications 8 à 11, caractérisé en ce qu'on utilise à titre de composés de carbone des hydrocarbones aromatiques ou aliphatiques, gazeux, liquides ou solides ou des polymères d'oléfines aliphatiques ou aromatiques.

13. Carbones avec une nanostructure définie pouvant être obtenus d'après le procédé selon l'une quelconque des revendications 8 à 12.
